Europäisches Patentamt

European Patent Office

Office européen des brevets

(19)

(11) EP 0 786 480 B1

(12) EUROPEAN PATENT SPECIFICATION

(45) Date of publication and mention
of the grant of the patent:
**23.07.2003 Bulletin 2003/30**

(51) Int Cl.[7]: **C08G 18/63**

(21) Application number: **97200216.6**

(22) Date of filing: **28.01.1997**

(54) **Polymer polyol and process for the preparation of polymer polyols**

Polymerpolyol und Verfahren zur Herstellung von Polymerpolyolen

Polyol polymère et procédé pour la préparation de polyols polymères

(84) Designated Contracting States:
**BE CH DE ES FR GB IT LI NL PT**

(30) Priority: **29.01.1996 EP 96200202**

(43) Date of publication of application:
**30.07.1997 Bulletin 1997/31**

(73) Proprietor: **SHELL INTERNATIONALE
RESEARCH MAATSCHAPPIJ B.V.
2596 HR Den Haag (NL)**

(72) Inventors:
• **Breukel, Bertus Jan
1031 CM Amsterdam (NL)**
• **van Elderen-van Dusseldorp, Els
1031 CM Amsterdam (NL)**
• **Hitchings, Gregory John
1031 CM Amsterdam (NL)**
• **Martin, Martinus Engelbert
1031 CM Amsterdam (NL)**
• **Rutten, Johannes Govert
1031 CM Amsterdam (NL)**

(56) References cited:
**EP-A- 0 495 551       US-A- 4 357 430
US-A- 4 837 247**

## Description

The present invention relates to a polymer polyol and to a process for the preparation of a polymer polyol. More specifically, the present invention relates to polystyrene polyols of which the polystyrene particles are relatively small and have a narrow particle size distribution. In addition, the present invention relates to a process for preparing polymer polyols, including the above polystyrene polyols, wherein use is made of a specific seed dispersion.

Polymer polyols are known in the art. In general, a polymer polyol is a stable dispersion of a polymer in a polyol. Many different polymers and polyols can be used in such systems. The present invention is concerned with polymer polyols, wherein the polymers are based on ethylenically unsaturated monomers polymerized in-situ via free radical polymerization. Such in-situ polymerization requires the presence of a free radical polymerization catalyst. If necessary, a dispersion stabilising agent may also be present. Styrene, acrylonitrile and to a lesser extent (meth) acrylates are the most frequently used monomers, whereby polystyrene, poly(acrylonitrile), copolymers of styrene and acrylonitrile and terpolymers of styrene, acrylonitrile and methyl methacrylate are the polymers normally formed. Examples of polymer polyols containing this type of polymers are, for instance, described in EP-A-0,076,491; EP-A-0,162,588; EP-A-0,343,907; US-4,418,840 and EP-A-0,495,551.

The present invention involves the use of a seed dispersion for preparing polymer polyols. As such, this is a known technique, which basically involves adding a dispersion of polymer particles to a polyol and subsequently polymerising additional monomer in the presence of the seed dispersion. The seed polymer particles will grow in size as a result of the polymerization of the additional monomer.

For instance, in EP-A-0,365,986 a two-step process for preparing graft polymer dispersions is disclosed comprising the steps of first preparing in a continuous mode an intermediate graft polymer dispersion having a solids content below 30% by weight and having a broad particle size distribution of the polymer particles followed by charging this intermediate graft polymer dispersion to a semi-batch reactor as seeds for further grafting to increase the solids content to above 30% by weight, suitably up to about 40% by weight. A starting seed in the form of a preformed graft polyol is used in the first continuous step to obtain the desired intermediate dispersion. The polymer most suitably used in the polymer polyol is styrene-acrylonitrile copolymer. The polymer polyols obtained have a broad particle size distribution and a uniform viscosity from sample to sample.

In US-4,148,840 a polymer polyol is prepared by polymerizing ethylenically unsaturated monomers in a blend of first polyol and a preformed polymer polyol. The preformed polymer polyol is formed by the in-situ polymerization of ethylenically unsaturated monomer in a second polyol, which may be the same as or different from the first polyol. Although it is stated that polymer polyols can be produced with high acrylonitrile/styrene ratios (up to 0/100), in none of the working examples the application of pure polystyrene polyols is described. Those examples, in which styrene-acrylonitrile copolymers were used as the seed and in which styrene was added in the second step as the sole monomer, resulted in polymer polyols with polymer particles having particle sizes above 30 micron.

In EP-A-0,510,533 a process for the preparation of polymer polyols is disclosed using a coupled polyether polyol as stabiliser. The stabiliser is used in an amount of from 0.1 to 10% by weight. The polymer polyol is suitably formed by the free radical polymerization of ethylenically unsaturated monomer(s) in a medium comprising a liquid polyol, the stabilizer and a seed dispersion. The seed dispersion may have a solids content of from 5 to 50% by weight and contains polymer particles having diameters of at least 30 nm and more suitably between 50 and 200 nm. It is stated that staged addition of monomers, stabilizer, base polyol and/or free radical initiator allows a better control of reaction temperatures and provides for more stable product with a more uniform particle size. Styreneacrylonitrile copolymers are clearly the most suitable polymer, as is also illustrated by the working examples which all describe the preparation or use of such styrene-acrylonitrile polyols.

In EP-A-0,640,633 a continuous process for producing stable, low viscosity polymer polyols is disclosed comprising the steps of preparing a first reaction product by polymerising less than 50% by weight of total monomer in at least 50% by weight of total polyol, optionally in the presence of a precursor stabilizer, and subsequently producing the polymer polyol by polymerising the balance of monomer in a medium containing the first reaction product and the balance of polyol and optionally a precursor stabiliser. The precursor stabiliser is the reaction product of a reactive unsaturated compound, which is any compound capable of forming an adduct with a polyol and having a carbon-carbon double bond reactive with the monomer system used, with a selected polyol. The preferred reactive unsaturated compound is a compound that causes the stabiliser to have fumarate-type unsaturation, such as maleic anhydride. The stabiliser is used in amounts up to 20% by weight, the exact amount being determined by the end-use application. Again, styrene-acrylonitrile copolymers are the preferred polymers.

None of the prior art references cited hereinbefore actually describe the preparation of polymer polyols containing polymer particles having styrene contents above 80% by weight, whilst at the same time having a small particle size (i.e. below 10 micron, more suitably below 5 micron) in combination with a narrow particle size distribution. The only publication describing the preparation of polymer polyols via a seeding process wherein the polymer has a styrene content above 80% by weight is US-4,148,840. However, substantially all of the polymer particles in the final polymer polyol have a particle size above 30 micron, whilst the seed polymer used is still a styrene-acrylonitrile copolymer.

The present invention aims to provide a process which enables the preparation of polymer polyols wherein the polymer particles consist for at least 80% by weight -and most preferably for essentially 100% by weight- of polystyrene and wherein the polymer particles have a small particle size combined with a narrow particle size distribution. More specifically, the present invention aims to provide a process for preparing polymer polyols by a seeding process, wherein a polymer seed dispersion containing uniformly sized, very small polymer particles is first prepared after which at least part of the seed dispersion is used in a subsequent polymerization step for preparing the final polymer polyol. The present invention aims to provide such process that in said subsequent polymerization step nucleation or formation of new polymer particles is minimised as much as possible, suitably to a zero level, so that only growth of existing seed polymer particles occurs in order to ensure the formation of small polymer particles having a uniform, monomodal and narrow polymer particle size distribution. Furthermore, the present invention aims to provide a process wherein the growth stage can be carried out, if desired, via an all-in-one-pot process, thus allowing operating this stage in a continuous mode in industrial application.

It has been found that the these and other aims can be achieved by a free radical polymerization process involving the use of a specific polymer seed dispersion and a specific sequence of process steps.

Accordingly, the present invention relates to a process for the preparation of a stable polymer polyol having a narrow polymer particle size distribution comprising the steps of:

(a) preparing a polymer seed dispersion by polymerizing in the presence of a free radical initiator (i) from 5 to 40% by weight of one or more ethylenically unsaturated monomers, at least 80% by weight of which is styrene, in (ii) from 95 to 60% by weight of a liquid polyol medium comprising at least 30% by weight based on total weight of the liquid polyol medium of a coupled polyol;

(b) admixing a base polyol and one or more ethylenically unsaturated monomers, at least 80% by weight of which is styrene, with at least part of the polymer seed dispersion obtained in step (a) at a temperature below the polymerization temperature; and subsequently

(c) heating the resulting mixture to a temperature at which polymerization occurs and allowing the polymerization to proceed until completion, thus yielding the polymer polyol,

whereby a free radical initiator is added in step (b) and/or (c), whereby the polymer seed dispersion is used in such amount in step (b) that the coupled polyol present in it constitutes from 1 to 15% by weight of the final polymer polyol and whereby the amount of ethylenically unsaturated monomer(s) used in step (b) is such that the solids content of the final polymer polyol is in the range of from 10 to 55% by weight based on total weight of polymer polyol.

The polymer present in the stable polymer polyol prepared by the present process is obtained by polymerizing ethylenically unsaturated monomers, at least 80% by weight of which is styrene, in the presence of a free radical polymerization catalyst. The remainder up to 100% by weight of ethylenically unsaturated monomer can be formed by one or more comonomers containing ethylenic unsaturation susceptible to free radical copolymerization with styrene. Such comonomers include other vinyl aromatic hydrocarbons, like alphamethyl styrene and methyl styrene, acrylonitrile, methacrylonitrile, vinyl chloride, various alkyl acrylates and methacrylates, such as methyl methacrylate and t-butyl methacrylate, and conjugated dienes, like 1,3-butadiene and isoprene. The preferred comonomer is acrylonitrile. In a more preferred embodiment of the present invention, however, as much as 95% by weight or more of the ethylenically unsaturated monomer(s) used in steps (a) and/or (b) is styrene, whilst most preferably styrene is used as the sole monomer in steps (a) and (b), thus resulting in a 100% polystyrene polyol product.

It is important that in the first step of the present process, i.e. the preparation of the polymer seed dispersion, small polymer particles are prepared. Such polymer particles suitably have a mean particle size of less than 1 micron, preferably from 0.1 to 0.7 micron, more preferably from 0.15 to 0.5 micron. Such small polymer particles can be obtained by employing a high concentration of coupled polyol, which acts as a dispersion stabiliser, in the reaction mixture. The coupled polyol may chemically interact with the ethylenically unsaturated monomer(s) to form stabiliser molecules, either by grafting onto a chain of polymerised monomer or by incorporation of one or more coupled polyol units in the polymer chain via copolymerization with the monomer. A usual precondition for such chemical interaction is that the coupled polyol contains a least one reactive olefinic bond, suitably in that part of the molecule originating from the coupling agent. Alternatively, the coupling agent used to prepare the coupled polyols is chosen such that its residual part included in the coupled polyol molecule is fully compatible with the polymer formed from the ethylenically unsaturated monomer(s). The polyol tails stemming from the coupled polyol are fully soluble in the liquid polyol phase, whilst the backbone polymeric chain of the stabiliser molecules or the coupling agent residue in the coupled polyol molecule is fully compatible with the polymer particles.

Apart from the coupled polyol, the liquid polyol medium may comprise one or more additional polyether polyols. However, the liquid polyol medium should comprise at least 30% by weight of coupled polyol. For a given mass of polymer, the total surface area of all polymer seed particles together will become larger at decreasing particle size of the polymer seed particles. As a result, the required amount of coupled polyol will increase at decreasing polymer particle size. Since particle sizes as small as less than 1 micron are suitably aimed at, it is required that at least 30% by weight of the liquid polyol medium is constituted by coupled polyol. It is, however, preferred that the liquid polyol medium consists for at least 50% by weight, more preferably at least 75% by weight, of coupled polyol. A liquid polyol medium consisting essentially of coupled polyol has been found most advantageous.

Free radical polymerization catalysts or free radical initiators are known in the art and include both peroxide compounds and azo compounds. Examples of suitable free radical initiators are peroxide catalysts like dibenzoyl peroxide, lauroyl peroxide, t-amylperoxy-2-ethylhexanoate, di-t-butyl peroxide, diisopropyl peroxide carbonate, t-butyl peroxy-2-ethylhexanoate, t-butylperpivalate, t-butylperneo-decanoate, t-butylperbenzoate, t-butyl percrotonate, t-butyl perisobutyrate, t-butylperoxy-l-methylpropanoate, t-butylperoxy-2-ethylpentanoate, t-butylperoxyoctanoate and di-t-butylperphthalate. Examples of azo compounds are azobis-isobutyronitrile (AIBN) and azobis-(2-methylbutanenitrile). The quantity of initiator may range from 0.01% by weight to 5% by weight based on total weight of monomer(s).

In general, the free radical polymerization for preparing polymer polyols is carried out at a temperature in the range of from 60 to 140°C and at pressure up to 20 bar, while the preferred temperature ranges from 70°C to 120°C and the pressure is preferably atmospheric.

Coupled polyols which can be used as a precursor stabiliser in the preparation of polymer polyols are known in the art. Suitable coupled polyols are those disclosed in EP-A-0,495,551, that is, coupled polyols consisting essentially of the reaction product of a base polyol having an average nominal functionality of at least 2 with a polyisocyanate in such proportion that the ratio of equivalents hydroxyl groups to equivalents isocyanate groups is greater than 1. In a preferred embodiment the base polyol has an average nominal functionality of from 3 to 6 and is reacted with a difunctional polyisocyanate in such proportion that the initial ratio of equivalents hydroxyl groups to equivalents isocyanate groups is greater than 1. In a more preferred embodiment the base polyol is a trifunctional polyoxyalkylene polyol and the polyisocyanate is a difunctional organic polyisocyanate, which are reacted in such proportion that the initial ratio of equivalents hydroxyl groups to equivalents isocyanate groups is in the range of from 2.1 to 10.0 and most preferably is as close to 2.1 as possible. A very much preferred trifunctional polyoxyalkylene polyol is the reaction product of glycerol and ethylene oxide, propylene oxide or a mixture thereof, whilst much preferred diisocyanates are 4,4'-diphenylmethane diisocyanate, familiarly known as MDI, and 2,4- and 2,6-tolylene diisocyanate and mixtures thereof, familiarly known as TDI.

Another class of suitable coupled polyol dispersion stabilisers are those of which the molecules comprise at least one reactive olefinic bond beside one or more polyol tails. Such stabilising agents are also described as macromers and can react with ethylenically unsaturated monomer molecules, thus becoming part of a polymeric chain. Examples of such macromer stabilisers are acrylate functionalised polyols, such as, for example, described in US-4,390,645, and the maleate/fumarate functionalised polyols described in, amongst others, US-5,364,906 and EP-A-0,461,800. The use of the coupled polyols consisting essentially of the reaction product of a base polyol with a polyisocyanate as described above, is, however, preferred. Depending on solids content and viscosity of the polymer seed dispersion, it may be diluted with a polyol between steps (a) and (b). Due to the relatively high molecular weight and corresponding high dynamic viscosity of the coupled polyol, the polymer seed dispersion may have such high dynamic viscosity that it is difficult to handle. In such a case dilution with a polyol, suitably the same polyol which is used as the base polyol in subsequent step (b), may reduce the viscosity to such a level that handling of the polymer seed dispersion is facilitated. It will be appreciated that the exact amount of polyol to be added depends on the desired dynamic viscosity of the polymer seed dispersion and desired solids content of the final polymer polyol. Typically, a maximal working viscosity can be of the order of 50,000 mPa.s (25 °C).

In step (c) of the present process the polymer particles present in the polymer seed dispersion further grow in size by polymerising ethylenically unsaturated monomer added in step (b) in the presence of a free radical initiator. It is important that in step (c) nucleation or formation of new polymer particles is at least minimised and preferably essentially avoided in order to ensure that a uniform, monomodal and narrow particle size distribution is obtained in the final polymer polyol. This is attained by maximising the concentration of ethylenically unsaturated monomer in the liquid phase of the "growth reaction system" in step (c).

In practice this implies that step (b) can, for instance, be carried out by first preparing a blend of base polyol, additional ethylenically unsaturated monomer and optionally free radical initiator in the amounts required to arrive at the desired end product and subsequently admixing this blend with the desired amount of polymer seed dispersion obtained in step (a). Alternatively, step (b) can be carried out by adding base polyol, additional ethylenically unsaturated monomer and optionally free radical initiator separately to the polymer seed dispersion under admixing conditions, e. g. stirring. On this latter option several variations are possible, such as adding monomer(s) and a preblend of polyol and optionally catalyst as two separate components to the polymer seed dispersion under admixing conditions. In any event step (b) must be carried out under such conditions that polymerization of added monomer(s) is substantially prevented. This is effectively achieved by maintaining the temperature below the temperature at which the polymerization reaction will start, i.e. usually below 60 °C. Accordingly, step (b) can, for instance, be conveniently carried out at room temperature.

As has been stated, it is important that the concentration of ethylenically unsaturated monomer in the liquid phase of the growth reaction system is maximised and that in practice this implies that all the additional ethylenically unsaturated monomer be admixed in step (b). The total quantity of free radical initiator may be added either during step (b) or during step (c), and either in one batch or in portions (or doses) over time. Alternatively, a portion of the free radical initiator may be added, or dosed, during step (b) and the remainder during step (c), whilst yet another alternative is that the majority of free radical initiator is added, or dosed, during step (c). It may be advantageous to dose the free radical initiator during step (c) in order to allow optimum control of the polymerization reaction and, thereby, the heat generated during this polymerization reaction. Suitably where dosing of the free radical initiator occurs, this may take place over a time period in the range of from 1 to 10 hours, very suitably from 3 to 6 hours, preferably 4 or 5 hours, and the portions added evenly over time; i.e. linearly dosed.

The monomer(s) added in step (b) should consist for at least 80% by weight, preferably at least 95% by weight, of styrene, but most preferably consists of essentially 100% by weight of styrene. The exact amount of ethylenically unsaturated monomer(s) to be used in step (b) depends on the desired solids content of the final polymer polyol and on the solids content of the polymer seed dispersion prepared in step (a). The amount of monomer used in step (b) should in any event be such that the solids content of the final polymer polyol is in the range of from 10 to 55% by weight based on total weight of polymer polyol. Preferably, the amount of monomer used is such that the solids content of the final polymer polyol is from 20 to 45% by weight. The free radical initiator used in step (b) and/or (c), may be, but not necessarily is, the same initiator as used in the preparation of the seed dispersion in step (a).

The base polyol used in step (b) in principle can be any polyol or mixture of polyols known to be suitably applied in polymer polyol systems. In general, suitable polyols are those compounds having at least two aliphatic hydroxyl groups. The base polyol used in step (b) may, but not necessarily is, the same polyol as is used to prepare the coupled polyol in step (a). For the purpose of the present invention, a very suitable class of polyols are the polyether polyols, also normally referred to as polyoxyalkylene polyols. Such polyether polyols are typically obtained by reacting a starting compound having a plurality of active hydrogen atoms with one or more alkylene oxides, such as ethylene oxide, propylene oxide, butylene oxide and mixtures of two or more of these. Suitable polyether polyols are those having a number average molecular weight of at least 500, more suitably from 1,500 to 6,500. In addition, the base polyol suitably has an average nominal functionality (Fn) of at least 2.0, preferably of from 2.5 to 6.0. Examples of suitable base polyols, which are commercially available, are CARADOL MC36-03, CARADOL SC46-02, CARADOL MH56-03 and CARADOL SA36-01 (CARADOL is a trade mark).

The amount of polymer seed dispersion used in step (b) should be such that the coupled polyol present in it constitutes in the range of from 1 to 15% by weight of the total weight of the final polymer polyol. This is important in order to ensure optimum stabilisation of the polymer particles in the final polymer polyol. In a preferred embodiment the amount of seed dispersion used in step (b) is such that the coupled polyol present in it constitutes in the range of from 2 to 10% by weight of the final polymer polyol.

In step (b) a small amount of chain transfer agent may be added in addition to the other components. The use of such chain transfer agents and their nature is known in the art as exemplified by US-4,689,354; EP-A-0,365,986; EP-A-0,510,533 and EP-A-0,640,633. Chain transfer agents enable a control of crosslinking between the various polymer molecules and hence may effect stability and filterability of the polymer polyol. It has been found within the framework of the present invention that the addition of a small amount of chain transfer agent may considerably suppress reactor fouling, which occurs during the polymerization in step (c). If used at all, a chain transfer agent is suitably used in an amount of from 0.1 to 5% by weight, preferably 1 to 4% by weight, based on total weight of reactants. Examples of suitable chain transfer agents are 1-butanol, 2-butanol, isopropanol, ethanol, methanol, water, cyclohexane, toluene and mercaptans, such as ethanethiol, 1-heptanethiol, 2-octanethiol and toluenethiol.

In step (c) the mixture resulting from step (b), suitably a uniform dispersion, is heated to a temperature in the range of from 60 to 140°C -and, if necessary, is brought onto the desired pressure- in order to effect polymerization. As described hereinbefore, all or part of the free radical initiator in as far it has not already been added in the preceding step (b), may also be added at this stage, either in one batch or in a dosed manner. Whilst the polymerization reaction proceeds, stirring may be continued at a modest level in order to promote a smooth release of the heat generated during the exothermic polymerization reaction.

After step (c) the volatile components, i.e. residual monomer and free radical initiator decomposition products, are conveniently removed by stripping. Such stripping is suitably carried out by heating to a temperature in the range of from 100 to 150°C with stirring and application of light nitrogen purge or of vacuum.

One of the advantages of the present process is that the final polymerization step may be a one-pot process, which allows the use in commercial operation of a continuous-type of reactor, for instance a continuous pipe reactor. Polymer seed dispersion, base polyol, monomer(s) and catalyst -and suitably chain transfer agent- are continuously loaded and mixed at the entry of the pipe and subsequently are passed through the pipe-shaped reactor chamber, which is being heated and kept at the desired temperature. Whilst flowing through the pipe the polymerization reaction takes place and at the end of the pipe the polymer polyol is recovered. An additional advantage of using such a continuous reactor system is that problems associated with the removal of the reaction heat released as polymerization occurs are minimised due to the high ratio of reactor wall surface to product volume. A further advantage of the present process is that the resulting polymer polyols have a lower viscosity at a given solids content predominantly due to the low concentration of coupled polyol which is present in the reaction mixture resulting from step (b).

In a further aspect the present invention also relates to a polymer polyol comprising a liquid polyol phase and from 10 to 55% by weight based on total weight of polymer polyol of solid polymer particles stably dispersed therein, wherein the polymer particles consist essentially of polystyrene and have a mean particle size in the range of from 0.5 to 2.5 micron with a particle size span of at most 1.3. Preferred mean particle sizes are those within the range of from 0.6 to 2.0 micron, whilst a preferred particle size span is in the range of from 0.4 to 1.0. It will be understood that in the above characterization of the polymer polyol according to the present invention any stabiliser present on the outer surface of the polymer particles is not taken into account.

The expression "particle size span" refers to the width of the peak indicating the monomodal polymer particle size distribution. The particle size span (PS span) is defined as

$$PS\ span = \frac{d(90\%) - d(10\%)}{d(50\%)}$$

wherein d(x%) is the particle diameter in micron at which x% by volume of the particles has a smaller particle diameter. Particle size measurements are on a volume basis and can be carried out by methods known in the art, such as the laser light scattering technique.

Polymer polyols comprising a liquid polyol phase and a polymer consisting essentially of polystyrene are known from EP-A-0,495,551. However, the polystyrene polymer polyols disclosed therein have broader particle size distributions than those of the present polystyrene polymer polyols, i.e. the polystyrene polyols disclosed in EP-A-0,495,551 have a PS span which is greater than 1.3.

As has already been indicated hereinbefore, the present polymer polyols have a lower viscosity at a given solids content predominantly due to the low concentration of coupled polyol which is present in the reaction mixture resulting from step (b). Such lower viscosity is highly desired from a processing point of view, for instance, when using the polymer polyols in polyurethane production.

In a preferred embodiment of the present invention, the polymer polyol has a solids content in the range of from 20 to 45% by weight based on total weight of polymer polyol. The liquid polyol phase of the polymer polyol suitably contains a coupled polyol in an amount of from 1 to 15% by weight, preferably from 2 to 10% by weight, based on total weight of polymer polyol, which coupled polyol consists essentially of the reaction product of a base polyol having an average nominal functionality of at least 2 with a polyisocyanate in such proportion that the ratio of equivalents hydroxyl groups to equivalents isocyanate groups is greater than 1. Such coupled polyols and preferred species thereof have been described in more detail hereinbefore when discussing the preparation process according to the present invention.

The base polyol present suitably is a trifunctional polyoxyalkylene polyol, preferably the reaction product of glycerol and ethylene oxide, propylene oxide or a mixture thereof, and the polyisocyanate is a difunctional organic polyisocyanate, preferably MDI or TDI, which are reacted in such proportion that the ratio of equivalents hydroxyl groups to equivalents isocyanate groups is in the range of from 2.0 to 10.0. Suitable base polyols are those described above when discussing the preparation process.

The present polymer polyol is very useful in the production of various polyurethane articles, particularly polyurethane foams which can be of a flexible or of a rigid nature depending on the reactants used and the amounts in which the various reactants are used. In general, the polyurethane is formed by reacting the present polymer polyol with a polyisocyanate in the presence of a suitable catalyst. If a polyurethane foam is to be prepared, a blowing agent should be used as well. Other additives, such as flame retardants, foam stabilizers and crosslinking agents may also be used when forming the polyurethane article.

Polyisocyanates that may be used are those conventionally applied in the production of (flexible) polyurethane foams. Useful polyisocyanates should contain at least two isocyanate groups and include both aliphatic -usually alkylene- and aromatic di-, tri-, tetra- and higher isocyanates known in the art to be suitably applied in the production of flexible polyurethane foams. Mixtures of two or more of such aliphatic and/or aromatic polyisocyanates may also be applied. Most commonly applied polyisocyanates are 2,4-toluene diisocyanate (2,4-TDI), 2,6-TDI, mixtures of 2,4-TDI and 2,6-TDI, 4,4'-diphenylmethane diisocyanate (MDI) and polymeric MDI.

The invention is now further illustrated by the following examples without restricting the scope of the invention to these particular embodiments.

Example 1

A polymer seed dispersion was prepared by adding styrene and coupled polyol to a reactor in a weight ratio of styrene/coupled polyol of 20/80. Also added were 150 mmol/kg styrene of free radical initiator LUPEROX 575 (t-amylperoxy-2-ethylhexanoate; LUPEROX is a trade mark). The coupled polyol was obtained by reacting MDI with a polyoxyalkylene polyol. This polyoxyalkylene polyol, in return, was the reaction product of glycerol and a mixture of ethylene oxide and propylene oxide. The average molecular weight of the coupled polyol (as determined by GPC) was approximately 50,000.

The mixture was stirred and the temperature was raised to 90 °C. The polymerization started and proceeded for 7 hours under continuous stirring, whilst the temperature was maintained at 90 °C.

The resulting polymer seed dispersion was subsequently diluted at a 1:1 volume to volume ratio with the polyether polyol CARADOL SC46-02, a propylene oxide/ethylene oxide adduct of glycerol having a number average molecular weight of about 3,500. Further details of the diluted polymer seed dispersion are given in Table I.

Subsequently, a blend was prepared containing 9% by weight of diluted polymer seed dispersion, 52% by weight of CARADOL SC46-02 and 39% by weight of styrene monomer. In addition, 75 mmol/kg styrene of the free radical initiator LUPEROX 575 (t-amylperoxy-2-ethylhexanoate; LUPEROX is a trade mark) and isopropanol (5% by weight on total weight of reactants) were added. All components were rapidly mixed at 30 °C until a uniform dispersion was obtained. Then, the reaction mixture was heated from 30 to 80 °C over a period of 1 hour and the reaction was allowed to proceed at 80 °C until completion (approximately 7 hours).

Residual styrene monomer and peroxide decomposition products were subsequently removed by heating the product to 125 °C under continuous stirring and a light nitrogen purge. The polystyrene polymer polyol product was a white dispersion having a solids content of 40% by weight. Particle size characteristics were determined by laser light scattering analysis using a Malvern Mastersizer MS20 (trade mark) apparatus.

The results are indicated in Table I.

Comparative Example 1

A polymer polyol was prepared by the single step dosing-technique by adding to a stirred mixture of CARADOL SC46-02 (87.5% by weight) and the coupled polyol used in Example 1 (12.5% by weight) at 90 °C, via linearly dosing over a period of 3 hours, 40% by weight -based on total weight of final reaction mixture- of styrene monomer and 150 mmol/kg styrene of the peroxide initiator LUPEROX 575. After all styrene monomer and peroxide initiator were added, the polymerization reaction was allowed to proceed to completion for 2 hours. Volatiles were subsequently stripped from the product (120 °C for 15 hours under light nitrogen purge). The resulting polystyrene polymer polyol product was a white dispersion having a solids content of 39.9% by weight.

Further details are given in Table I. The following abbreviations are used in Table I:

| | |
|---|---|
| [C.P.]liq | Weight percentage of coupled polyol in the liquid phase |
| [Solids] | Solids content in weight percent |
| Vd,25 | Dynamic viscosity at 25 °C in mPa.s |
| Mean PS | Mean particle size in micron |

TABLE I

| Polystyrene Polymer Polyols | | | |
|---|---|---|---|
| | Example 1 | | Comp. Ex. 1 |
| | Seed Dispersion[1] | Polymer Polyol | Polymer Polyol |
| [C.P.]liq (%wt) | 50 | 6.8 | 12.5 |
| [Solids] (%wt) | 9.1 | 39.5 | 39.9 |
| Vd,25 (mPa.s) | 11,214 | 8,910 | 14,020 |
| Mean PS(micron) | 0.25 | 1.03 | 1.33 |
| PS span | 0.80 | 0.85 | 1.74 |

[1] after dilution with CARADOL SC46-02

From Table I it can be seen that the seeding process according to the present invention indeed results in 100% polystyrene polymer polyols of which the polymer particles are very small (1.03 micron) whilst at the same time having a more uniform and narrow particle size distribution (PS span of only 0.85, versus 1.74 for the one step dosing process). In addition, the viscosity at equal solids content is significantly better (8,910 mPa.s, versus 14,020 mPa.s for the one step dosing process).

Example 2

A diluted polymer seed dispersion was prepared in the same way as in Example 1 except that a coupled polyol was used having an average molecular weight of 40,000, that the polymerization time was 6 hours and that CARADOL MH56-03 (a propylene oxide/ethylene oxide adduct of glycerol having a number average molecular weight of about 3,000) was used as the polyol. Further details of the diluted polymer seed dispersion are given in Table II.
Subsequently, a blend was prepared containing 11% by weight of diluted polymer seed dispersion, 64% by weight of CARADOL MH56-03 and 25% by weight of styrene monomer. The components were rapidly mixed at 30 °C until a uniform dispersion was obtained. Then, the reaction mixture was heated to 80 °C and 75 mmol/kg styrene of the free radical initiator LUPEROX 575 were linearly dosed to the moderately stirred reaction mixture over a period of 4 hours. The reaction was then allowed to proceed at 80 °C to completion for a further 2 hours.
Residual styrene monomer and peroxide decomposition products were subsequently removed by heating the product to 125 °C under continuous stirring and a light nitrogen purge. The polystyrene polymer polyol product was a white dispersion having a solids content of 24.6% by weight. Particle size characteristics were determined in the same way as in Example 1.
The results are indicated in Table II.

Comparative Example 2

A polymer polyol was prepared by the single step dosing-technique by adding to a stirred mixture of CARADOL MH56-03 (90% by weight) and the coupled polyol used in Example 1 (10% by weight) at 90 °C, via linearly dosing over a period of 3 hours, 25% by weight -based on total weight of final reaction mixture- of styrene monomer and 150 mmol/kg styrene of the peroxide initiator LUPEROX 575. After all styrene monomer and peroxide initiator were added, the polymerization reaction was allowed to proceed to completion for 2 hours. Volatiles were subsequently stripped from the product (120 °C for 15 hours under light nitrogen purge). The resulting polystyrene polymer polyol product was a white dispersion having a solids content of 23.9% by weight.
Further details are given in Table II.

TABLE II

| Polystyrene Polymer Polyols (2) | | | |
|---|---|---|---|
| | Example 2 | | Comp. Ex. 2 |
| | Seed Dispersion[1] | Polymer Polyol | Polymer Polyol |
| [C.P.]liq (%wt) | 50 | 5 | 10 |
| [Solids] (%wt) | 9.1 | 24.6 | 23.9 |
| Vd,25 (mPa.s) | 13,500 | 2,410 | 2,828 |
| Mean PS(micron) | 0.25 | 0.64 | 0.80 |
| PS span | 0.71 | 0.88 | 1.41 |

[1] after dilution with CARADOL MH56-03

Table II shows that also at lower solids content, the same advantages as indicated in Table I occur, that is, the seeding process according to the present invention results in 100% polystyrene polymer polyols of which the polymer particles are very small whilst at the same time having a highly uniform and narrow particle size distribution. The viscosity at about equal solids content is again significantly better for the present polystyrene polyol.

Example 3

A polymer polyol was made by preparing a blend containing 9% by weight of the diluted polymer seed dispersion prepared as in Example 1, 60% by weight of CARADOL SC46-02 and 30% by weight of styrene monomer, whilst keeping the temperature below 60°C. All components were mixed and then heated to 100°C. Subsequently, 75 mmol/kg styrene of the free radical initiator LUPEROX 575 were linearly dosed over 5 hours. After all the peroxide was added, the polymerisation reaction was allowed to proceed to completion for 2 more hours at 100°C. Volatiles were subsequently stripped from the product. The resulting polystyrene polymer polyol product was a white dispersion having a solids content of 31.5% by weight, a viscosity at 25°C of 4,220 mPa.s, a Mean PS of 0.72 micron, and a PS span of 1.24.

Example 4

The procedure of Example 3 was followed using a polymer polyol prepared by blending 9% by weight of the diluted polymer seed dispersion prepared as in Example 1, 50% by weight CARADOL SC46-02 and 30% by weight of styrene monomer.

The same amount of the peroxide LUPEROX 575 was dosed to the polymer polyol over 5 hours, but in this case as a blend in 9% by weight CARADOL SC46-02.

The resulting polystyrene polymer polyol had a solids content of 31.0%, a viscosity (25°C) of 3,980 mPa.s, a Mean PS of 0.73 micron, and a PS span of 1.45.

Example 5

A polymer polyol was made by preparing a blend containing 9% by weight of the diluted polymer seed dispersion prepared as in Example 2, 60% by weight of CARADOL SC46-02 and 30% by weight of styrene monomer, whilst keeping the temperature below 60°C. All components were mixed and then heated to 100°C. Subsequently 75 mmol/kg styrene of the free radical initiator LUPEROX 575 was linearly dosed over 5 hours. After all the peroxide was added, the polymerisation reaction was allowed to proceed to completion for 2 more hours at 100°C. Volatiles were subsequently stripped from the product. The resulting polystyrene polymer polyol product was a white dispersion having a solids content of 30% by weight, a viscosity (25°C) of 3,300 mPa.s, a Mean PS of 0.72 micron and a PS span of 1.28.

**Claims**

1.  Process for the preparation of a stable polymer polyol having a narrow polymer particle size distribution comprising the steps of:

    (a) preparing a polymer seed dispersion by polymerizing in the presence of a free radical initiator (i) in the range of from 5 to 40% by weight of one or more ethylenically unsaturated monomers, at least 80% by weight of which is styrene, in (ii) in the range of from 95 to 60% by weight of a liquid polyol medium comprising at least 30% by weight based on total weight of the liquid polyol medium of a coupled polyol;
    (b) admixing a base polyol and one or more ethylenically unsaturated monomers, at least 80% by weight of which is styrene, with at least part of the polymer seed dispersion obtained in step (a) at a temperature below the polymerization temperature; and subsequently
    (c) heating the resulting mixture to a temperature at which polymerization occurs and allowing the polymerization to proceed until completion, thus yielding the polymer polyol,

    whereby a free radical initiator is added in step (b) and/or (c), whereby the polymer seed dispersion is used in such amount in step (b) that the coupled polyol present in it constitutes in the range of from 1 to 15% by weight of the final polymer polyol and whereby the amount of ethylenically unsaturated monomer(s) used in step (b) is such that the solids content of the final polymer polyol is in the range of from 10 to 55% by weight based on total weight of polymer polyol.

2.  Process according to claim 1, wherein at least 95% by weight, and preferably essentially 100% by weight, of the ethylenically unsaturated monomer(s) used in steps (a) and/or (b) is styrene.

3.  Process according to claim 1 or 2, wherein the coupled polyol consists essentially of the reaction product of a base polyol having an average nominal functionality of at least 2 with a polyisocyanate in such proportion that the ratio of equivalents hydroxyl groups to equivalents isocyanate groups is greater than 1.

4.  Process according to claim 3, wherein the base polyol is a trifunctional polyoxyalkylene polyol, preferably the reaction product of glycerol and ethylene oxide, propylene oxide or a mixture thereof, and the polyisocyanate is a difunctional organic polyisocyanate, preferably MDI or TDI, which are reacted in such proportion that the ratio of equivalents hydroxyl groups to equivalents isocyanate groups is in the range of from 2.1 to 10.0.

**5.** Process according to any one of the preceding claims, wherein the liquid polyol medium used in step (a) comprises at least 50% by weight, preferably at least 75% by weight, based on total weight of the liquid polyol medium of the coupled polyol.

**6.** Process according to claim 5, wherein the liquid polyol medium consists essentially of the coupled polyol.

**7.** Process according to any one of the preceding claims, wherein the base polyol used in step (b) is a polyether polyol having a number average molecular weight of at least 500.

**8.** Process according to any one of the preceding claims, wherein the polymer seed dispersion is used in such amount in step (b) that the coupled polyol present in it constitutes in the range of from 2 to 10% by weight of the final polymer polyol.

**9.** Process according to any one of the preceding claims, wherein the amount of ethylenically unsaturated monomer (s) polymerised in step (b) is such that the solids content of the final polymer polyol is in the range of from 20 to 45% by weight based on total weight of polymer polyol.

**10.** Process according to any one of the proceeding claims, wherein the free radical initiator is linearly dosed over a time period in the range of from 3 to 6 hours.

**11.** Process according to any one of the proceeding claims, wherein the total quantity of free radical initiator is added during step (c).

**12.** Polymer polyol comprising a liquid polyol phase and in the range of from 10 to 55% by weight based on total weight of polymer polyol of solid polymer particles stably dispersed therein, wherein the polymer particles consist essentially of polystyrene and have a mean particle size in the range of from 0.5 to 2.5 micron with a particle size span of at most 1.3.

**13.** Polymer polyol according to claim 12 having a solids content in the range of from 20 to 45% by weight.

**14.** Polymer polyol according to claim 12 or 13, wherein the liquid polyol phase contains a coupled polyol in an amount in the range of from 1 to 15% by weight, preferably from 2 to 10% by weight, based on total weight of polymer polyol, which coupled polyol consists essentially of the reaction product of a base polyol having an average nominal functionality of at least 2 with a polyisocyanate in such proportion that the ratio of equivalents hydroxyl groups to equivalents isocyanate groups is greater than 1.

**15.** Polymer polyol according to claim 14, wherein the base polyol is a trifunctional polyoxyalkylene polyol, preferably the reaction product of glycerol and ethylene oxide, propylene oxide or a mixture thereof, and the polyisocyanate is a difunctional organic polyisocyanate, preferably MDI, which are reacted in such proportion that the ratio of equivalents hydroxyl groups to equivalents isocyanate groups is in the range of from 2.0 to 10.0.

**16.** Use of a polymer polyol according to any one of claims 12 to 15 in the production of polyurethane.

**Patentansprüche**

**1.** Verfahren zur Herstellung eines stabilen Polymerpolyols mit einer engen Polymerteilchengrößenverteilung, das die folgenden Stufen umfaßt:

(a) Bereiten einer Polymersaatdispersion durch Polymerisieren von (i) 5 bis 40 Gew.-% eines oder mehrerer ethylenisch ungesättigter Monomere, wovon wenigstens 80 Gew.-% Styrol sind, in (ii) 95 bis 60 Gew.-% eines flüssigen Polyolmediums, das wenigstens 30 Gew.-%, bezogen auf das Gesamtgewicht des flüssigen Polyolmediums, an einem gekuppelten Polyol umfaßt, in Gegenwart eines freiradikalischen Initiators;
(b) Beimischen eines Grundpolyols und eines oder mehrerer ethylenisch ungesättigter Monomere, wovon wenigstens 80 Gew.-% Styrol sind, zu wenigstens einem Teil der in Stufe (a) erhaltenen Polymersaatdispersion bei einer Temperatur unterhalb der Polymerisationstemperatur; und anschließend
(c) Erhitzen des resultierenden Gemisches auf eine Temperatur, bei der die Polymerisation erfolgt, und Fortschreitenlassen der Polymerisation bis zum Abschluß, wodurch das Polymerpolyol erhalten wird,

wobei in Stufe (b) und/oder (c) ein freiradikalischer Initiator zugesetzt wird, wobei die Polymersaatdispersion in Stufe (b) in einer solchen Menge verwendet wird, daß das in ihr vorliegende gekuppelte Polyol 1 bis 15 Gew.-% des Endpolymerpolyols ausmacht und wobei die Menge an in Stufe (b) verwendeten ethylenisch ungesättigten Monomeren derart ist, daß der Feststoffgehalt des Endpolymerpolyols im Bereich von 10 bis 55 Gew.-% liegt, bezogen auf das Gesamtgewicht von Polymerpolyol.

2. Verfahren nach Anspruch 1, worin wenigstens 95 Gew.-% und vorzugsweise im wesentlichen 100 Gew.-% der in den Stufen (a) und/oder (b) verwendeten ethylenisch ungesättigten Monomere Styrol sind.

3. Verfahren nach Anspruch 1 oder 2, worin das gekuppelte Polyol im wesentlichen aus dem Reaktionsprodukt eines Grundpolyols mit einer mittleren nominellen Funktionalität von wenigstens 2 mit einem Polyisocyanat in einer solchen Proportion besteht, das daß Verhältnis von Äquivalenten an Hydroxylgruppen zu Äquivalenten an Isocyanatgruppen größer als 1 ist.

4. Verfahren nach Anspruch 3, worin das Grundpolyol ein trifunktionelles Polyoxyalkylenpolyol ist, vorzugsweise das Reaktionsprodukt von Glycerin mit Ethylenoxid, Propylenoxid oder einem Gemisch davon, und das Polyisocyanat ein difunktionelles organisches Polyisocyanat, vorzugsweise MDI oder TDI, ist, die in einer solchen Proportion umgesetzt werden, daß das Verhältnis von Äquivalenten an Hydroxylgruppen zu Äquivalenten an Isocyanatgruppen im Bereich von 2,1 bis 10,0 liegt.

5. Verfahren nach einem der vorstehenden Ansprüche, worin das in Stufe (a) verwendete flüssige Polyolmedium wenigstens 50 Gew.-%, vorzugsweise wenigstens 75 Gew.-%, bezogen auf das Gesamtgewicht des flüssigen Polyolmediums, an dem gekuppelten Polyol umfaßt.

6. Verfahren nach Anspruch 5, worin das flüssige Polyolmedium im wesentlichen aus dem gekuppelten Polyol besteht.

7. Verfahren nach einem der vorstehenden Ansprüche, worin das in Stufe (b) verwendete Grundpolyol ein Polyetherpolyol mit einem zahlenmittleren Molekulargewicht von wenigstens 500 ist.

8. Verfahren nach einem der vorstehenden Ansprüche, worin die Polymersaatdispersion in einer solchen Menge in Stufe (b) verwendet wird, daß das in ihr vorliegende gekuppelte Polyol von 2 bis 10 Gew.-% des Endpolymerpolyols ausmacht.

9. Verfahren nach einem der vorstehenden Ansprüche, worin die Menge an in Stufe (b) polymerisierten ethylenisch ungesättigten Monomeren derart ist, daß der Feststoffgehalt des Endpolymerpolyols im Bereich von 20 bis 45 Gew.-%, bezogen auf das Gesamtgewicht des Polymerpolyols, beträgt.

10. Verfahren nach einem der vorstehenden Ansprüche, worin der freiradikalische Initiator linear innerhalb einer Zeitdauer im Bereich von 3 bis 6 Stunden zudosiert wird.

11. Verfahren nach einem der vorstehenden Ansprüche, worin die Gesamtmenge an freiradikalischem Initiator während der Stufe (c) zugesetzt wird.

12. Polymerpolyol, umfassend eine flüssige Polyolphase und von 10 bis 55 Gew.-%, bezogen auf das Gesamtgewicht des Polymerpolyols, an darin stabil dispergierten festen Polymerteilchen, wobei die Polymerteilchen im wesentlichen aus Polystyrol bestehen und eine mittlere Teilchengröße im Bereich von 0,5 bis 2,5 µm mit einer Teilchengrößenspanne von höchstens 1,3 aufweisen.

13. Polymerpolyol nach Anspruch 12 mit einem Feststoffgehalt im Bereich von 20 bis 45 Gew.-%.

14. Polymerpolyol nach Anspruch 12 oder 13, worin die flüssige Polyolphase ein gekuppeltes Polyol in einer Menge im Bereich von 1 bis 15 Gew.-%, vorzugsweise von 2 bis 10 Gew.-%, bezogen auf das Gesamtgewicht des Polymerpolyols, enthält, wobei das gekuppelte Polyol im wesentlichen aus dem Reaktionsprodukt eines Grundpolyols mit einer mittleren nominellen Funktionalität von wenigstens 2 mit einem Polyisocyanat in einer solchen Proportion besteht, daß das Verhältnis von Äquivalenten an Hydroxylgruppen zu Äquivalenten an Isocyanatgruppen größer als 1 ist.

**15.** Polymerpolyol nach Anspruch 14, worin das Grundpolyol ein trifunktionelles Polyoxyalkylenpolyol ist, vorzugsweise das Reaktionsprodukt aus Glycerin mit Ethylenoxid, Propylenoxid oder einem Gemisch davon, und das Polyisocyanat ein difunktionelles organisches Polyisocyanat ist, vorzugsweise MDI, die in einer solchen Proportion umgesetzt werden, daß das Verhältnis von Äquivalenten an Hydroxylgruppen zu Äquivalenten an Isocyanatgruppen im Bereich von 2,0 bis 10,0 liegt.

**16.** Verwendung eines Polymerpolyols nach einem der Ansprüche 12 bis 15 in der Herstellung von Polyurethanen.


**Revendications**

**1.** Procédé de préparation d'un polymère polyol stable ayant une étroite distribution de tailles de particules de polymère comprenant les étapes suivantes :

(a) la préparation d'une dispersion de germination de polymère par polymérisation en présence d'un initiateur radicalaire (i) de 5 à 40 % en poids d'un ou plusieurs monomères éthyléniquement insaturés, dont au moins 80 % en poids constituent du styrène, dans (ii) de 95 à 60 % en poids d'un milieu de polyol liquide comprenant au moins 30 % en poids par rapport au poids total du milieu de polyol liquide d'un polyol couplé;
(b) le mélange d'un polyol de base et d'un ou plusieurs monomères éthyléniquement insaturés, dont au moins 80 % en poids constituent du styrène, avec au moins une partie de la dispersion de germination de polymère obtenue dans l'étape (a) à une température en dessous de la température de polymérisation; et ensuite
(c) le chauffage du mélange résultant à une température à laquelle la polymérisation se produit et en laissant la polymérisation se poursuivre jusqu'à la fin, en donnant ainsi le polymère polyol,

un initiateur radicalaire étant ajouté dans l'étape (b) et/ou (c), la dispersion de germination de polymère étant utilisée en une quantité telle dans l'étape (b) que le polyol couplé présent dans celle-ci constitue de 1 à 15 % en poids du polymère polyol final et la quantité de monomère(s) éthyléniquement insaturé(s) utilisé(s) dans l'étape (b) étant telle que la teneur en matières solides du polymère polyol final se situe dans la plage de 10 à 55 % en poids par rapport au poids total de polymère polyol.

**2.** Procédé suivant la revendication 1, dans lequel au moins 95 % en poids, et avantageusement pratiquement 100 % en poids, du ou des monomères éthyléniquement insaturés utilisés dans les étapes (a) et/ou (b) sont du styrène.

**3.** Procédé suivant l'une ou l'autre des revendications 1 et 2, dans lequel le polyol couplé se compose essentiellement du produit de réaction d'un polyol de base ayant une fonctionnalité nominale moyenne d'au moins 2 avec un polyisocyanate dans une proportion telle que le rapport des équivalents groupes hydroxyle aux équivalents groupes isocyanate est supérieur à 1.

**4.** Procédé suivant la revendication 3, dans lequel le polyol de base est un polyoxyalkylène glycol trifonctionnel, avantageusement le produit de réaction de glycérol et d'oxyde d'éthylène, d'oxyde de propylène ou d'un mélange de ceux-ci, et le polyisocyanate est un polyisocyanate organique difonctionnel, avantageusement du MDI ou du TDI, que l'on fait réagir dans une proportion telle que le rapport des équivalents groupes hydroxyle aux équivalents groupes isocyanate se situe dans la plage de 2,1 à 10,0.

**5.** Procédé suivant l'une quelconque des revendications précédentes, dans lequel le milieu de polyol liquide utilisé dans l'étape (a) comprend au moins 50 % en poids, avantageusement au moins 75 % en poids, par rapport au poids total du milieu de polyol liquide du polyol couplé.

**6.** Procédé suivant la revendication 5, dans lequel le milieu de polymère liquide se compose essentiellement du polyol couplé.

**7.** Procédé suivant l'une quelconque des revendications précédentes, dans lequel le polyol de base utilisé dans l'étape (b) est un polyéther polyol ayant un poids moléculaire moyen numérique d'au moins 500.

**8.** Procédé suivant l'une quelconque des revendications précédentes, dans lequel la dispersion de germination de polymère est utilisée en une quantité telle dans l'étape (b) que le polyol couplé présent dans celle-ci constitue de 2 à 10 % en poids du polymère polyol final.

**9.** Procédé suivant l'une quelconque des revendications précédentes, dans lequel la quantité de monomère(s) éthyléniquement insaturé(s) polymérisé(s) dans l'étape (b) est telle que la teneur en matières solides du polymère polyol final se situe dans la plage de 20 à 45 % en poids par rapport au poids total de polymère polyol.

**10.** Procédé suivant l'une quelconque des revendications précédentes, dans lequel l'initiateur radicalaire est linéairement dosé sur une période de temps allant de 3 à 6 heures.

**11.** Procédé suivant l'une quelconque des revendications précédentes, dans lequel la quantité totale d'initiateur radicalaire est ajoutée au cours de l'étape (c).

**12.** Polymère polyol comprenant une phase de polyol liquide et de 10 à 55 % en poids par rapport au poids total de polymère polyol de particules de polyol solides dispersées de façon stable dans celui-ci, dans lequel les particules de polymère se composent essentiellement de polystyrène et ont une taille de particule moyenne allant de 0,5 à 2,5 microns avec une étendue de tailles de particules d'au plus 1,3.

**13.** Polymère polyol suivant la revendication 12, ayant une teneur en matières solides allant de 20 à 45 % en poids.

**14.** Polymère polyol suivant l'une ou l'autre des revendications 12 et 13, dans lequel la phase de polyol liquide contient un polyol couplé en une quantité allant de 1 à 15 % en poids, avantageusement de 2 à 10 % en poids, par rapport au poids total de polymère polyol, lequel polyol couplé se compose essentiellement du produit de réaction d'un polyol de base ayant une fonctionnalité nominale moyenne d'au moins 2 avec un polyisocyanate dans une proportion telle que le rapport des équivalents groupes hydroxyle aux équivalents groupes isocyanate soit supérieur à 1.

**15.** Polymère polyol suivant la revendication 14, dans lequel le polyol de base est un polyoxyalkylène polyol trifonctionnel, avantageusement le produit de réaction de glycérol et d'oxyde d'éthylène, d'oxyde de propylène ou d'un mélange de ceux-ci, et le polyisocyanate est un polyisocyanate organique difonctionnel, avantageusement du MDI, que l'on fait réagir dans une proportion telle que le rapport des équivalents groupes hydroxyle aux équivalents groupes isocyanate se situe dans la plage de 2,0 à 10,0.

**16.** Utilisation d'un polymère polyol suivant l'une quelconque des revendications 12 à 15 dans la production de polyuréthanne.